# EUROPEAN PATENT SPECIFICATION

(11) **EP 2 351 137 B1**
(45) Date of publication and mention of the grant of the patent: **27.02.2013**
(21) Application number: 09764613.7
(22) Date of filing: 26.11.2009
(51) Int. Cl.: H01M 8/22, C02F 1/469

(54) **ENERGY GENERATING SYSTEM AND METHOD THEREFOR**
ENERGIEERZEUGUNGSSYSTEM UND VERFAHREN DAFÜR
SYSTÈME DE PRODUCTION D'ÉNERGIE ET PROCÉDÉ ASSOCIÉ

(30) Priority: 26.11.2008 NL 1036242
(43) Date of publication of application: 03.08.2011
(73) Proprietor: Redstack B.V., 8606 JR Sneek (NL)
(72) Inventor: HAMELERS, Hubertus, Victor, Marie, NL-8934 CJ Leeuwarden (NL); POST, Jan, Willem, NL-8934 CJ Leeuwarden (NL); METZ, Sybrand, NL-8934 CJ Leeuwarden (NL)
(74) Representative: Verdijck, Gerardus
(86) International application number: PCT/NL2009/050718
(87) International publication number: WO 2010/062175

(56) References cited:
- EP-A1- 1 348 670
- WO-A1-01/89671
- JONES A T; FINLEY W ED - INSTITUTE OF ELECTRICAL AND ELECTRONICS ENGINEERS/THE MARINE TECHNOLOGY SOCIETY: "Recent developments in salinity gradient power" OCEANS 2003. MTS/IEEE PROCEEDINGS. CELEBRATING THE PAST, TEAMING TOWARD THE FUTURE. SAN DIEGO, CA, SEPT. 22 - 26, 2003; 20030922; 20030922 - 20030926 COLUMBIA, MD : MARINE TECHN. SOC, US, vol. 4, 22 September 2003 (2003-09-22), pages 2284-2287, XP010694839 ISBN: 978-0-933957-30-5
- DORIANA BROGIOLI: "Extracting Renewable Energy from a Salinity Difference Using a Capacitor" PHYSICAL REVIEW LETTERS, vol. 103, 29 July 2009 (2009-07-29), pages 058501-1-058501-4, XP002543217 DOI: 10.1103/PhysRevLett.103.058501

## Description

The present invention relates to an energy generating system using concentration differences, e.g. the concentration difference between sea water (about 30 g/l salt) and river water (about 1 g/l salt). Similar streams with concentration differences are for example present in industrial salt water streams, like in waste water treatment plants.

EP 1 348 670 and WO 01/89671 disclose a capacitive deionization process.

NL 1031148 describes the generation of energy, in a Reverse Electoral Dialysis (RED) process. The RED process uses an anode and a cathode as electrodes, that are separated by alternately placed cation-exchange membranes and anion-exchange membranes. A RED stack of membranes is an electro-dialytic pile between an anode and a cathode. The membranes are kept separate with spacers enabling flow of a diluate (e.g. river water) and a concentrate (e.g. sea water. At the electrodes the following electro-chemical reactions may take place:

| | | |
|---|---|---|
| Anode: | 2H₂O → O₂ (g) + 4H⁺ + 2e⁻ | E°= +1.23 V |
| | 2Cl⁻ → Cl₂ + 2e⁻ | E°= +1.36V |
| Kathode: | 2H₂O + 2e⁻→ H₂ (g) + 2OH⁻ | E°= -0.83V |

With E° being the standard potentials at 298 K and 1 bar. These standard potentials define the energetic losses, due to the electro-chemical reactions taking place. Also, gasses formed at the electrodes need to be removed. Another problem, due to a relatively high pH in or at the cathode, is scaling of the electrode with, for example, calcium carbonate. The use of other electrode reactions, like Fe(II)/Fe(III) is possible, however, this use is limited in view of the environment, toxicity and cost. Furthermore, to enable energy-generation in the RED process a stack of membranes is required. The membranes in this stack are separated using spacers maintaining a distance between adjacent membranes of 0.2 mm, or even less, to minimize the internal resistance. The use of these spacers may result in efficiency losses in the energy generating process due to the restriction in flow, the isolating effect of the spacer increasing the internal resistance (Ω) and the sensitivity of the spacers for fouling and accumulation of bio-mass that in practice often requires the pretreatment of the fluids.

In addition, in an electro-dialytic pile a short circuit may occur through the manifolds acting as supply and exit openings of the fluid between the membranes. Besides the short circuit losses, mechanical leakage of fluids from the pile to the outside may occur. Another problem is the leakage between the internal fluids that may occur. These problems may result in efficiency loss. Another problem with the electro-dialytic pile is the intensive assembly required for the pile. Such pile exists of hundreds of cells, comprising a cation-exchanging membrane, a seal, a spacer for the diluate, an anion-exchanging membrane and a seal and spacer for the concentrate.

The objective of the present invention is to improve the generating of energy from concentration gradients, by removing or minimizing at least some of the problems mentioned above.

Therefore, the energy-generating system according to the present invention comprises the features of claim 1.

Both the cation-exchanging material and the anion-exchanging material are placed between the capacitive elements and the fluid. The fluid is either a concentrate or a diluate to which the ion-exchange materials are alternately exposed. An appropriate concentrate is sea water and an appropriate diluate is river water. By alternately bringing the ion-exchange materials into contact with the concentrate and the diluate the capacitive elements are charged (adsorption) and discharged (desorption) using salt gradients.

The ion-exchange material in contact with a concentrated salt solution realizes a concentration gradient, and therefore a chemical potential difference, between the salt-solution and the capacitive elements. The first capacitive element is charged with cations. The second capacitive element is charged with anions. The adsorption (physisorption) takes place when the molecules in the fluid become attached to the surface of the solid (adsorbent). The adsorbed molecules become physically fastened to the solid parts of the capacitive elements. Therefore, the capacitive elements are preferably porous, and conductive. To enable transport of ions through the ion-exchange material towards the solid parts a fluid, preferably water, is provided. By alternating providing a fluid as a concentrate and a diluate a (capacitive) flow of charge will result.

Charging of the electrodes is achieved by ions through alternately providing a concentrate and a diluate. The ion-exchanging material enables the adsorption of anions on the anode, and adsorption of cations on the cathode. Herewith an efficient energy-generating system can be achieved.

After being exposed to the concentrate the ion-exchange materials are brought into contact with the diluate. This results in a concentration gradient and realizes a chemical potential difference between the charged capacitive elements and the diluate. Therefore, the capacitive elements will be discharged (desorption).

Exposing the ion-exchange materials and capacitive elements alternately to a concentrate and a diluate can be realized by a control system changing the fluid in the system from a concentrate to a diluate and vice versa. In an alternative embodiment the ion-exchange materials and capacitive elements are transferred by transferring means from a concentrate to a diluate and vice versa.

During the charging and/or discharging process electrical energy can be generated from the system by connecting the current collectors of the capacitive elements to an electrical circuit. The current collector can be an electrode or collector.

In a preferred embodiment the capacitive element comprise active carbon. Active carbon is treated carbon that binds molecules and ions to its surface by the process of adsorption as described above. Active carbon has an internal surface of about 500-1500 m²/g. Activated carbon is a microporous and inert carbon, capable of adsorbing especially organic molecules or ions from fluids.

In a preferred embodiment according to the present invention the first and/or second capacitive element comprise a salt solution.

By providing the first and second capacitive element with a salt solution of e.g. 30 g/l, energy can be generated both during the charging and discharging of the capacitive element. During the interval that the ion-exchange materials are in contact with the fluid comprising a concentrated salt solution, the cations from this concentrated salt solution will diffuse through the cation-exchange material. At the same time the anions from the concentrated salt solution will diffuse through the anion-exchange material. The electro-neutrality in the capacitive elements is being maintained by adsorption of ions. No substantive electrochemical reactions will occur in the capacitive elements as the generated potential drive for these reactions is insufficient. As the capacitive elements are connected by the current collector in an electrical circuit energy can be generated during the charging phase of the process. During the contact of the ion-exchange materials with river water (or another diluate) the capacitive elements are being discharged. During this discharge-period energy can be generated from the capacitive elements with the electrons being transferred in the opposite direction between the capacitive elements as compared to the charging phase. So, using the salt solution energy can be generated during both the charging and discharging phase. It will be possible to use one capacitive element shaped as a wire, while another capacitive element is shaped as a type of container.

In a preferred embodiment according to the present invention an additional energy source is provided for at least partially charging of the capacitive elements.

By providing an additional external energy source to the system one or more of the capacitive elements can be charged, at least partially, by this additional source. This achieves a relatively fast charging of the capacitive elements.

In a preferred embodiment according to the present invention the first and/or second capacitive elements are substantially shaped as wires connected to a current collector.

Wires, preferably made of carbon, are coated with one of a cation-exchange material or anion-exchange material. The center of the wires preferably comprises a conductive material like aluminum or graphite, with the center surrounded by carbon for example and an ion-exchange material. This minimizes the electrical resistance in axial direction of the wires. The cation exchanging wires are connected to a first collector, e.g. like in a brush. The anion exchanging wires are connected, in a similar way, to a second collector. By using wires a relatively large surface area for the exchange of cations and anions is achieved. Furthermore, manufacturing the wires with the coated layer allows for a continuous production process, thereby enabling an efficient operation. The brushes are alternately exposed to concentrate, like seawater, and diluate, like river water. This exposure can be achieved by placing the different brushes in a type of container that is batch wise provided with one of the concentrate or diluate. Alternatively, it is possible to relocate the brushes, instead of the flows, from concentrate to diluate and vice versa.

The wires can be connected in a series connection in stead of parallel. This may increase the potential significantly.

Preferably, the brushes with the wires are compressed in such a way that the distance between the cation exchanging wires and the anion exchanging wires is minimal. This small distance between the two types of wires is especially relevant during the discharging process. An additional advantage of the brush configuration is that it may be cleaned relatively easily, in case of fouling or accumulation, as the brushes can be pulled apart to enable a mechanical and/or chemical cleaning.

The invention further relates to a method for generating energy from salt gradients in a fluid, comprising the steps in accordance with claim 12.

By alternately exposing the different types of ion-exchange material and/or capacitive elements to a concentrate and a diluate the first and second capacitive elements will be charged and discharged respectively. As mentioned for the energy generating system, energy can be generated at least during one of these steps using a current collector for the first and second capacitive element. By providing the capacitive elements, preferably comprising carbon, and more preferably active carbon, with e.g. a salt solution energy can be generated in both the charging and discharging step, as mentioned earlier for the energy generating system.

In further preferred embodiments of the method according to the present invention additional steps are included according to preferred embodiments of the system as described above achieving the same effects and advantages.

In a preferred embodiment according to the present invention, the first and second capacitive elements are substantially shaped as wires that are connected to a first and second current collector. These wires are either exposed to alternately flows of concentrate and diluate, or are alternately brought into these flows. Furthermore, the wires can be connected in a series connection in stead of parallel to increase the potential.

Further advantages, features and details of the invention are elucidated on the basis of preferred embodiments thereof, wherein reference is made to the accompanying drawing, in which:
- figure 1 shows a set-up of an energy generating system according to the invention;
- figure 2 shows some experimental results with the set-up of figure 1;
- figure 3 shows a second set-up of an energy generating system according to the invention;
- figure 4 shows experimental results of voltage over time measurements obtained with the set-up of figure 3;
- figure 5 shows experimental results of power density over time measurements obtained with the set-up of figure 3; and
- figure 6 shows an embodiment of an energy-generating system according to the present invention.

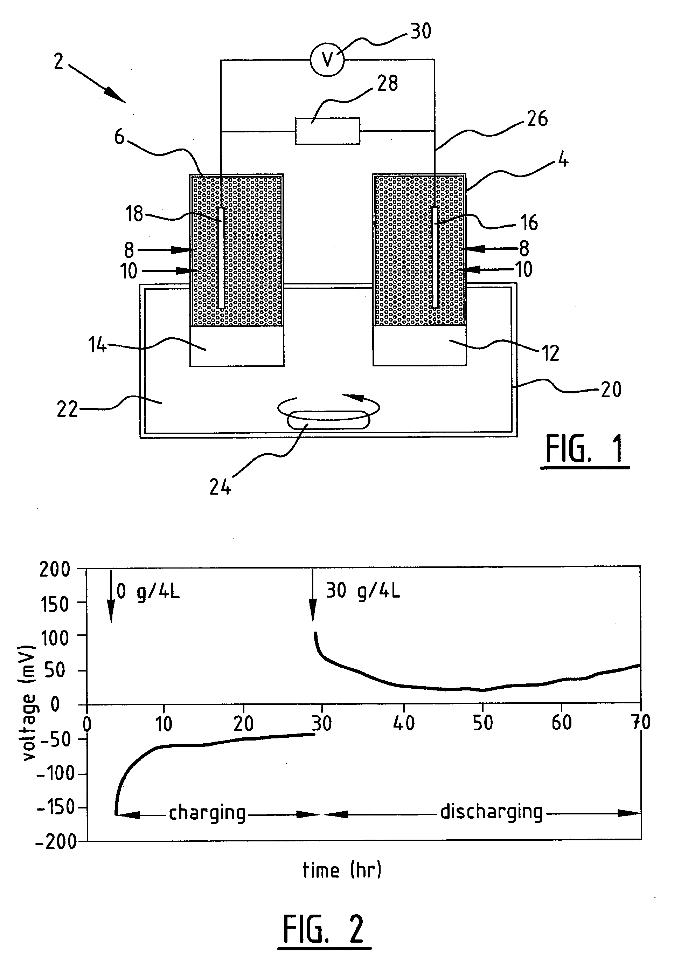

An energy generating system 2 (figure 1) comprises a first column-shaped container 4 and a second column-shaped container 6. The containers 4,6 comprise spherical particles 8 of active carbon. In addition, containers 4,6 contain a salt solution 10 with a salt concentration of 30 g/l. The diameter of the containers is about 45 mm. On top the containers 4,6 are provided with a septum enabling the bringing of columns 4,6 at vacuum. On the bottom of container 4 there is a stop with a hole wherein an anion-exchange material 12 is located. Container 6 is in a similar way on the bottom provided with a cation-exchange material 14. Inside container 4 there is a current collector, or electrode 16. Container 6 is provided with a similar electrode 18. Both containers 4,6 are placed in a container 20 at a distance of a few centimeters. Container 20 is filled with a fluid 22. Fluid 22 is alternately a solution with a low concentration of salt (about 0 g/l NaCl) and a high concentration (30 g/l NaCl). Fluid 22 is stirred with mixer 24. For enabling the generation of energy in system 2 the electrodes 16,18 are connected via wires 26 that are fed through the septum with an electrical circuit 28. In the illustrated embodiment the electrical circuit comprises a resistance of 2 kΩ. To measure the amount of energy generated in system 2, a Voltage meter 30 is provided over the circuit 28.

The cations from the concentrated salt solution 10 experience a driving force to diffuse through ion-exchange material 14 in case of a fluid 22 acting as diluate. At the same time, the anions in container 4 experience a driving force to diffuse through ion-exchange material 12. At the same time, the carbon particles 8 in container 4,6 adsorb co-ions. These co-ions in container 6 are anions and in container 4 cations. Therefore, the capacitive elements 8 are charged and energy is generated. In the illustrated embodiment, the flow of electrons is from container 6 with cation-exchange material 14 towards container 4 with anion-exchange material 12, thereby defining an electrical flow in the other direction. After changing fluid 22 to a concentrate, the concentrations in container 20 are higher as compared to the concentrations inside containers 4,6. Also, the polarity of the electrodes changes. The particles 8 are being discharged and also during this discharging period energy can be generated. The direction of the electrical flow is reversed as compared to the direction during the charging period.

### Experimental results

An experiment is conducted with an energy generating system 2 (figure 1). Results (figure 2) show that it is possible to generate energy with such system 2. Container 20 is filled with water with 0 g/l NaCl. Directly after filling the container 20 the measured voltage with Voltage meter 30 is about -160 mV. This potential difference occurs due to the concentration gradient over the two ion-exchange materials 12,14. This corresponds with theory and also with the experience of reverse electro-dialysis (RED) in other similar configurations wherein a voltage is measured of about 160/220 mV per two ion-exchange materials (one cell) in case the electrical circuit 28 is not closed. Due to charging of particles 8 and mixing of the solutions the potential differences decrease in time. After about 30 hours a new fluid 22 is put in container 20, comprising a solution of 30 g/l NaCl. The polarity changes sign. The concentration in container 20 is higher than the concentrations inside columns 4,6. The voltage measured by voltage meter 30 decreases during this discharging period, as the concentration gradient also decreases. Additionally, the results show an increase in voltage after about 50 hours. An explanation for this increase could be the fact that the fluid 10 in containers 4,6 improves its conductivity, as these fluids 10 have an increasing salt concentration. In figure 2, the charging period is indicated with "c" and the discharging period is indicated with "d".

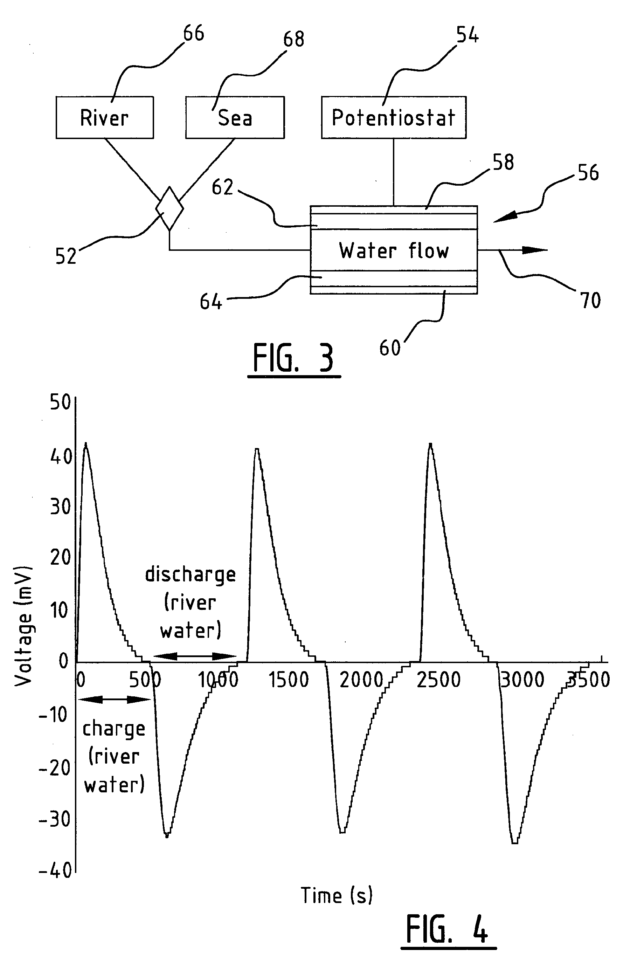

A further experiment has been performed using the setup depicted schematically in figure 3.

An ion selective capacitance (ISC) cell 51, composed of one compartment 56 containing two activated carbon electrodes 58, 60 (Axion Power International, New York, USA), one anion-exchange membrane 62 (AM1, Tokuyama Co., Tokyo, Japan) and one cation-exchange membrane 64 (CM1, Tokuyama Co., Tokyo, Japan) is connected to a variable resistor and to a potentiostat 54 (IviumStat, Eindhoven, The Netherlands) that records the cell-voltage.

Two containers are filled with fresh and salty water and connected to a peristaltic pump 52 (Masterflex, Cole Parmer Instrument, Vernon Hills, USA) for controlling the flowrate of the system. Pump 52 has a switch to select which of the different salt concentration solutions 66, 68 flows into the cell. The electrolytes are made by adding technical grade sodium chloride (Boom, Meppel, The Netherlands) to demineralized water. Two monovalent ionic solutions, [NaCl] = 510 mM and [NaCl] = 10 mM, are used as sea and river water respectively. The containers are refilled with new solutions after every experiment.

The considerable huge capacitance in system 51 is a result of the formation of an electric double layer at the interface of the electrodes and the electrolyte. When sea water flows in the compartment, the salinity gradient drives the salt ions to the electrodes, being selectively stored due to the cation exchange membrane (CEM) and anion exchange membrane (AEM). Because the system is connected to an external circuit, the polarization of the ions causes a charge imbalance that generates an external current that can be collected. After the electrodes reach the saturation point, the water flow is switched to river water and now the gradient drives the ions back to the electrolyte, cleaning the electrodes and forming a reverse current for electrical stability, allowing further electricity generation.

The electrical circuit of system 51 comprises the ion selective capacitor, an external load represented by the variable resistor and a potentiostat 54, measuring in chronopotentiometry mode. The cell-voltage is continuously measured by the potentiostat 54. The experiments are conducted using several different values of the resistance, reflecting different loads, and several different flow rates. The resistance is controlled by the variable resistor and the flow rate by pump 52. The influence of the external resistance and water flow is thus analyzed. Focusing on a general understanding of the ISC principle, a series of experiments is performed consisting of the charging and discharging of the AC electrodes. These processes are driven solely by the salinity gradient. No external voltage is applied to the cell in order to trigger the processes.

The graph of figure 4 shows the behavior of the cell-voltage along three charge-discharge cycles. The positive values represent the charging step "C", when sea water 68 is pumped continuously into the cell, filling the porous carbon electrodes with ions, driven by the salinity gradient. The voltage builds up to a maximum (42 mV) and proceeds with an exponential-like decrease until the total storage capacity is reached (0 V). Pump 52 is subsequently switched to river water 66, which starts the discharge step "D" represented by the negative values of the voltage. The reverse process starts and the gradient drives ions back to the electrolyte, bringing the voltage to a minimum (-34 mV) followed by an exponential-like increase, until the electrodes are fully discharged and the voltage stabilizes again (0V). Pump 52 is then switched back to sea water 68, restarting the cycle.

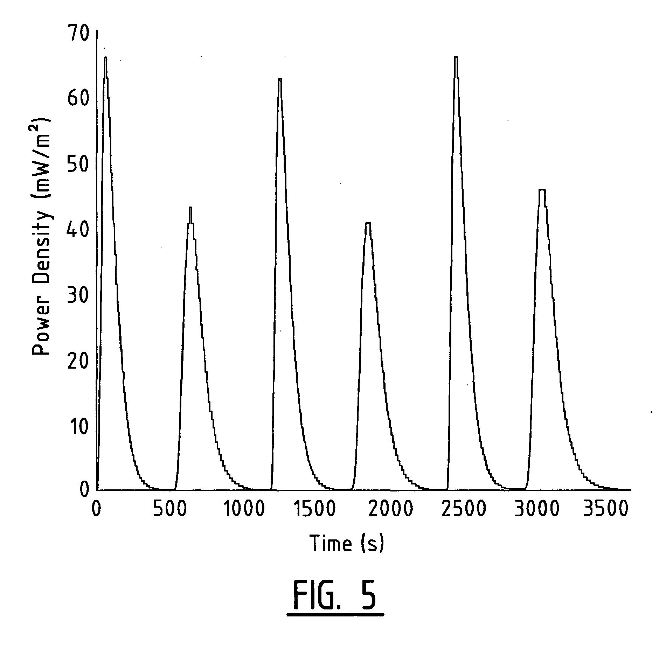

The power density is calculated as the product of voltage and electrical current, divided by the total surface area of the electrodes (267, 52 cm²). The behavior of the power density is shown in the graph of figure 5.

The highest value measured is 67 mW / m² and appears during the charging step. The higher conductivity of sea water, as compared to river water, makes the charging process faster than the reverse process in the cycle. This observation suggests that the step involving sea water can be directed to peak energy demands, while the step involving river water can be directed to regular energy use.

The influence of flow rate on system behavior is also investigated. Table 1 shows the highest power densities at three different pump speeds, with the external load set to 5 Ω to provide better and clearer measurements. The power density increment when flow rates are increased is caused by larger concentration differences across the membranes.

**Table 1. Obtained Power Densities using a fixed external load of 5Ω and different flow rates**

| | **25 ml/min** | **50 ml/min** | **75 ml/min** |
|---|---|---|---|
| **Power during charge phase (mW / m²)** | 21.5 | 27.3 | 40.7 |
| **Power during discharge phase (mW / m²)** | 8.4 | 13.5 | 23.4 |

The variable resistor connected to the device is used to analyze the electrical current, derived from the cell-voltage, and the influence of the external load on the achieved power density. The power density performance is improved by a decrease of the external load, but clearer measurements were not possible with loads lower than 1Ω, due to the sensibility of the equipment.

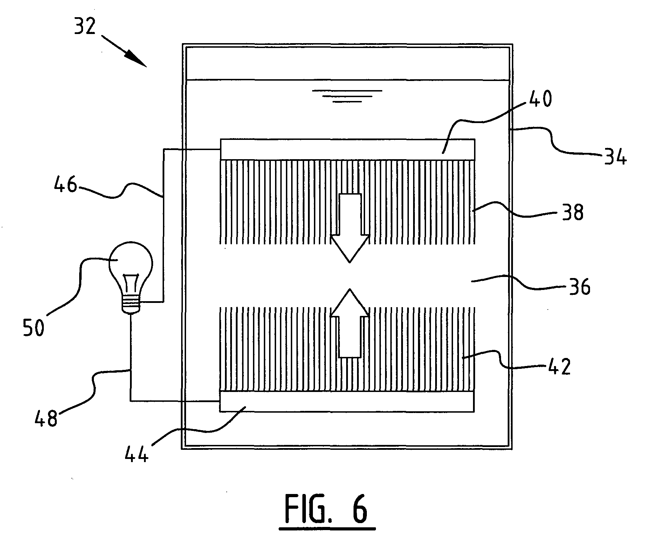

An alternative energy generating system 32 (figure 6) comprises a container 34 with a fluid 36. Fluid 36 is alternately a concentrate and diluate. In container 34 wire-shaped capacitive elements 38 coated with an anion-exchange material layer are connected to a current collector 40. Wires 42 provided with a cation-exchange material layer are connected to current collector 44. Through connecting wire 46,48 the current collectors 40,44 are connected to an electrical circuit 50. Collectors 40,44 are compressed in the direction of the arrows shown in the illustrated embodiment. The brushes formed by collectors 40,44 and wires 38,42 are alternately exposed to sea water and river water by either alternately changing fluid 36 or relocating the brushes in different containers 34.

The present invention is by no means limited to the above described embodiments. Rights sought are defined by the following claims, within the scope of which many modifications can be envisaged. A possible application of the system and method according to the invention would be the estuary of a river in the sea where the tide provides the system with either sea water or river water.

## Claims

1. Energy generating system (2,32) for generating energy from concentration gradients in a fluid (22,36), comprising:
- a first capacitive element (8,42) with a current collector (16,44),
- a second capacitive element (8,38) with a current collector (18,40); and
wherein the fluid alternately comprising a concentrate and a diluate for respectively charging and discharging the capacitive elements,
**characterized by**:
- a cation-exchange material (14) placed between the first capacitive element and the fluid;
- an anion-exchange material (12) placed between the second capacitive element and the fluid, wherein the cation- and anion-exchange materials are in contact with the fluid,
wherein the capacitive elements are connected by the current collector in an electrical circuit (28,50) thereby generating electrical energy.

2. Energy generating system according to claim 1,
wherein energy is generated at least during the discharging of the capacitive elements.

3. Energy generating system according to claim 1 or 2,
wherein energy is generated at least during the charging of the capacitive elements.

4. Energy generating system according to claim 1, 2 or 3, further comprising control means for changing the fluid from the concentrate to the diluate and vice versa.

5. Energy generating system according to any of claims 1-4, further comprising transfer means for transferring the capacitive elements from the concentrate to the diluate and vice versa.

6. Energy generating system according to any of claims 1-5, wherein at least one of the capacitive elements comprises active carbon.

7. Energy generating system according to any of claims 1-6, wherein the first and/or second capacitive elements comprise a salt solution (10).

8. Energy generating system according to any of claims 1-7, wherein an additional energy source is provided for at least partially charging of the capacitive elements.

9. Energy generating system according to any of claims 1-8, wherein the first and/or second capacitive elements are substantially shaped as wires (38,42) connected to a current collector (40,44).

10. Energy generating system according to claim 9,
wherein the wires of the first and second capacitive elements are compressed together.

11. Energy generating system according to claim 9 or 10, wherein the wires are connected in a series connection.

12. Method for generating energy from salt gradients in a fluid (22,36), comprising the steps of:
- providing a first capacitive element (8,42) with a current collector (16,44), and a cation-exchange material (14) placed between the element and the fluid;
- providing a second capacitive element (8,38) with a current collector (18,40), and an anion-exchange material (12) placed between the element and the fluid;
- connecting the capacitive elements by the current collector in an electrical circuit (28,50); and
- alternately exposing the capacitive elements to a concentrate and a diluate, thereby respectively charging and discharging the first and second capacitive elements, for generating electrical energy.

13. Method according to claim 12, wherein energy is generated during the charging and discharging of the capacitive elements.

14. Method according to claim 12 or 13, wherein the first and/or second capacitive elements are substantially shaped as wires (38,42) that are connected to a first and second current collector (40,44) respectively.

## Patentansprüche

1. Energieerzeugendes System (2, 32) zum Erzeugen von Energie aus Konzentrationsgradienten in einem Fluid (22, 36), umfassend:
- ein erstes kapazitives Element (8, 42) mit einem Stromabnehmer (16, 44),
- ein zweites kapazitives Element (8,38) mit einem Stromabnehmer (18, 40); und
wobei das Fluid abwechselnd ein Konzentrat und ein Diluat umfasst, um jeweils die kapazitiven Elemente zu laden und zu entladen, **gekennzeichnet durch**:
- ein Kationenaustauschmaterial (14), das zwischen dem ersten kapazitiven Element und dem Fluid angeordnet ist;
- ein Anionenaustauschmaterial (12), das zwischen dem zweiten kapazitiven Element und dem Fluid angeordnet ist, wobei das Kationen- und das Anionenaustauschmaterial in Kontakt mit dem Fluid sind,
wobei die kapazitiven Elemente **durch** den Stromabnehmer in einer elektrischen Schaltung (28, 50) verbunden sind, wodurch elektrische Energie erzeugt wird.

2. Energieerzeugendes System nach Anspruch 1, bei welchem Energie wenigstens während des Entladens der kapazitiven Elemente erzeugt wird.

3. Energieerzeugendes System nach einem der Ansprüche 1 oder 2, bei welchem Energie wenigstens während des Ladens der kapazitiven Elemente erzeugt wird.

4. Energieerzeugendes System nach einem der Ansprüche 1, 2 oder 3, des Weiteren ein Steuerungsmittel umfassend, um das Fluid von dem Konzentrat zu dem Diluat und umgekehrt zu wechseln.

5. Energieerzeugendes System nach einem der Ansprüche 1 bis 4, des Weiteren umfassend ein Übertragungsmittel, um die kapazitiven Elemente von dem Konzentrat zu dem Diluat und umgekehrt zu übertragen.

6. Energieerzeugendes System nach einem der Ansprüche 1 bis 5, bei welchem wenigstens eines der kapazitiven Elemente Aktivkohle umfasst.

7. Energieerzeugendes System nach einem der Ansprüche 1 bis 6, bei welchem das erste und/oder das zweite kapazitive Element eine Salzlösung (10) umfasst.

8. Energieerzeugendes System nach einem der Ansprüche 1 bis 7, bei welchem eine zusätzliche Energiequelle zum wenigstens teilweisen Laden der kapazitiven Elemente vorgesehen ist.

9. Energieerzeugendes System nach einem der Ansprüche 1 bis 8, bei welchem das erste und/oder das zweite kapazitive Element im Wesentlichen als Drähte (38, 42) geformt sind, die durch einen Stromabnehmer (40, 44) verbunden sind.

10. Energieerzeugendes System nach Anspruch 9, bei welchem die Drähte des ersten und des zweiten kapazitiven Elements zusammengedrückt sind.

11. Energieerzeugendes System nach einem der Ansprüche 9 oder 10, bei welchem die Drähte in einer Reihenschaltung verbunden sind.

12. Verfahren zum Erzeugen von Energie aus Salzgradienten in einem Fluid (22, 36), umfassend:
- Ausstatten eines ersten kapazitiven Elements (8, 42) mit einem Stromabnehmer (16, 44) und einem Kationenaustauschmaterial (14), das zwischen dem Element und dem Fluid angeordnet ist;
- Ausstatten eines zweiten kapazitiven Elements (8, 38) mit einem Stromabnehmer (18, 40) und einem Anionenaustauschmaterial (12), das zwischen dem Element und dem Fluid angeordnet ist;
- Verbinden der kapazitiven Elemente durch den Stromabnehmer in einer elektrischen Schaltung (28, 50); und
- abwechselndes Aussetzen der kapazitiven Elemente einem Konzentrat und einem Diluat, wodurch jeweils das erste und das zweite kapazitive Element geladen und entladen werden, um elektrische Energie zu erzeugen.

13. Verfahren nach Anspruch 12, bei welchem Energie während des Ladens und Entladens der kapazitiven Elemente erzeugt wird.

14. Verfahren nach einem der Ansprüche 12 oder 13, bei welchem das erste und/oder das zweite kapazitive Element im Wesentlichen als Drähte (38, 42) geformt sind, die mit einem ersten beziehungsweise einem zweiten Stromabnehmer (40, 44) verbunden sind.

## Revendications

1. Système de production d'énergie (2, 32) destiné à produire de l'énergie à partir de gradients de concentration dans un fluide (22, 36), comprenant :
- un premier élément capacitif (8, 42) avec un collecteur de courant (16, 44) ;
- un second élément capacitif (8, 38) avec un collecteur de courant (18, 40) ; et
dans lequel le fluide comprend alternativement un concentrat et un diluat pour charger et décharger respectivement les éléments capacitifs ;
**caractérisé par** :
- un matériau à échange de cations (14) placé entre le premier élément capacitif et le fluide ;
- un matériau à échange d'anions (12) placé entre le second élément capacitif et le fluide, dans lequel les matériaux à échange de cations et à échange d'anions sont en contact avec le fluide ;
dans lequel les éléments capacitifs sont connectés par le collecteur de courant dans un circuit électrique (28, 50), produisant de ce fait une énergie électrique.

2. Système de production d'énergie selon la revendication 1, dans lequel de l'énergie est produite au moins au cours de la décharge des éléments capacitifs.

3. Système de production d'énergie selon la revendication 1 ou 2, dans lequel de l'énergie est produite au moins au cours de la charge des éléments capacitifs.

4. Système de production d'énergie selon la revendication 1, 2 ou 3, comprenant en outre des moyens de commande destinés à faire passer le fluide du concentrat au diluat et vice versa.

5. Système de production d'énergie selon l'une quelconque des revendications 1 à 4, comprenant en outre des moyens de transfert destinés à transférer les éléments capacitifs du concentrat au diluat et vice versa.

6. Système de production d'énergie selon l'une quelconque des revendications 1 à 5, dans lequel l'un au moins des éléments capacitifs comprend du charbon actif.

7. Système de production d'énergie selon l'une quelconque des revendications 1 à 6, dans lequel le premier élément capacitif et/ou le second élément capacitif comprennent une solution saline (10).

8. Système de production d'énergie selon l'une quelconque des revendications 1 à 7, dans lequel une source d'énergie supplémentaire est fournie afin de charger au moins en partie les éléments capacitifs.

9. Système de production d'énergie selon l'une quelconque des revendications 1 à 8, dans lequel le premier élément capacitif et/ou le second élément capacitif présentent sensiblement des formes de fils (38, 42) connectés à un collecteur de courant (40, 44).

10. Système de production d'énergie selon la revendication 9, dans lequel les fils des premier et second éléments capacitifs sont comprimés ensemble.

11. Système de production d'énergie selon la revendication 9 ou 10, dans lequel les fils sont connectés selon une connexion en série.

12. Procédé de production d'énergie à partir de gradients de salinité dans un fluide (22, 36), comprenant les étapes consistant à :
- fournir un premier élément capacitif (8, 42) avec un collecteur de courant (16, 44), et un matériau à échange de cations (14) placé entre l'élément et le fluide ;
- fournir un second élément capacitif (8, 38) avec un collecteur de courant (18, 40), et un matériau à échange d'anions (12) placé entre l'élément et le fluide ;
- connecter les éléments capacitifs par le collecteur de courant dans un circuit électrique (28, 50) ; et
- exposer alternativement les éléments capacitifs à un concentrat et à un diluat, en chargeant et en déchargeant de ce fait respectivement les premier et second éléments capacitifs, afin de produire de l'énergie électrique.

13. Procédé selon la revendication 12, dans lequel de l'énergie est produite au cours de la charge et de la décharge des éléments capacitifs.

14. Procédé selon la revendication 12 ou 13, dans lequel le premier élément capacitif et/ou le second élément capacitif présentent sensiblement des formes de fils (38, 42) qui sont connectés à des premier et second collecteurs de courant (40, 44) respectivement.
